(19) **Europäisches Patentamt / European Patent Office / Office européen des brevets**

(11) **EP 4 289 505 A1**

(12) # EUROPEAN PATENT APPLICATION
published in accordance with Art. 153(4) EPC

(43) Date of publication:
**13.12.2023   Bulletin 2023/50**

(21) Application number: **22887480.6**

(22) Date of filing: **19.10.2022**

(51) International Patent Classification (IPC):
*B01J 37/02* (2006.01)   *B01J 21/02* (2006.01)
*B01J 21/10* (2006.01)   *B01J 21/06* (2006.01)
*B01J 23/745* (2006.01)   *B01J 23/75* (2006.01)
*B01J 23/755* (2006.01)   *B01J 23/22* (2006.01)
*B01J 23/28* (2006.01)   *B01J 37/04* (2006.01)

(52) Cooperative Patent Classification (CPC):
**B01J 21/02; B01J 21/06; B01J 21/10; B01J 23/22;
B01J 23/28; B01J 23/745; B01J 23/75;
B01J 23/755; B01J 37/02; B01J 37/04**

(86) International application number:
**PCT/KR2022/015961**

(87) International publication number:
**WO 2023/075284 (04.05.2023 Gazette 2023/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **29.10.2021   KR 20210146334**

(71) Applicant: **Lg Chem, Ltd.
Seoul 07336 (KR)**

(72) Inventors:
• **KIM, Sung Jin
  Daejeon 34122 (KR)**
• **KIM, Se Hyun
  Daejeon 34122 (KR)**
• **OH, Eu Gene
  Daejeon 34122 (KR)**
• **KIM, Og Sin
  Daejeon 34122 (KR)**
• **PARK, Hye Jin
  Daejeon 34122 (KR)**
• **GIM, Min Yeong
  Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **METHOD FOR PREPARING CATALYST FOR MANUFACTURE OF CARBON NANOTUBES**

(57)    The present invention relates to a method for preparing a catalyst which can produce carbon nanotubes having a higher bulk density by supporting a catalyst component under pressurized conditions, and to a method for producing carbon nanotubes using the catalyst

EP 4 289 505 A1

Processed by Luminess, 75001 PARIS (FR)

# Description

## TECHNICAL FIELD

The present invention relates to a method for preparing a catalyst for producing carbon nanotubes, which can produce high-density carbon nanotubes.

## BACKGROUND ART

Carbon nanotube materials include fullerenes, carbon nanotubes (CNTs), graphenes, graphite nanoplates, etc., and among them, the carbon nanotubes are macromolecules in which graphite planes with a hexagonal honeycomb shape obtained by the combination of one carbon atom with other three carbon atoms, are rolled-up into nanometer-size diameters.

The carbon nanotubes are hollow and light, and have sufficiently good electrical conductivity as copper, sufficiently good thermal conductivity as diamond, and tensile force as good as steel. According to the rolled-up shape, the carbon nanotubes may also be classified into single-walled carbon nanotubes (SWCNTs), multi-walled carbon nanotubes (MWCNT), and rope carbon nanotubes.

Recently, research on carbon nanotube synthesis technology capable of synthesizing a large amount of carbon nanotubes at one time is being actively conducted, and chemical vapor deposition (CVD) using a fluidized bed reactor among various methods can easily synthesize a large amount of carbon nanotubes, and thus, is most preferred in the actual industrial field.

Specifically, in the chemical vapor deposition, the catalyst for producing particle-shaped carbon nanotubes is filled in a fluidized bed reactor, and then the catalyst is floated while a carbon source gas and a flowing gas are injected into the fluidized bed reactor. Thereafter, carbon nanotubes are synthesized by heating the reactor and decomposing the carbon source gas on the surface of the floating catalyst.

In the production process of carbon nanotubes using this chemical vapor deposition, the activity of the catalyst acts as a main factor that may determine the productivity of the overall production process, and accordingly, studies on the catalyst having higher activity and a production method thereof are actively conducted. For example, it is known that the amount of the main catalyst component supported in the support may be further increased, or the activity of the catalyst may be further increased by supporting the cocatalyst component together. However, when an excessive of the main catalyst component is supported together with the cocatalyst, there is a limitation in that the cocatalyst deteriorates the dispersibility of the main catalyst component, and there is a limitation in a method of increasing the catalytic activity by increasing the amount of the main catalyst supported.

Accordingly, there is a need for further research on a method capable of further improving the activity of the finally prepared catalyst by optimizing the preparation process of the catalyst for producing carbon nanotubes.

## PRIOR ART DOCUMENT

(Patent Document 1) KR 10-2015-0007266 A

## DISCLOSURE OF THE INVENTION

## TECHNICAL PROBLEM

To solve the above limitations, an aspect of the present invention provides a method for preparing a catalyst for producing carbon nanotubes, the method being capable of producing carbon nanotubes with a high bulk density by performing pressurization in a mixing step during a catalyst preparation process.

## TECHNICAL SOLUTION

According to an aspect of the present invention, there is provided a method for preparing a catalyst for producing carbon nanotubes, and a method for producing carbon nanotubes.

Specifically, (1) according to an aspect of the present invention, there is provided a method for preparing a catalyst for producing carbon nanotubes, the method including: a step for mixing a catalyst supporting solution and a support to obtain a mixture (S1); a step for drying the mixture (S2); and a step for sintering the dried mixture to obtain a supported catalyst (S3), wherein step S1 above is performed under 1.5 bar to 4.5 bar.

(2) In (1) above of the present invention, there is provided the method for preparing a catalyst for producing carbon nanotubes, wherein step S1 above is performed under 2 bar to 4 bar.

(3) In (1) or (2) above of the present invention, there is provided the method for preparing a catalyst for producing carbon nanotubes, wherein the catalyst supporting solution includes a precursor of a main catalyst metal selected from the group consisting of Co, Ni, and Fe.

(4) In any one of (1) to (3) above of the present invention, there is provided the method for preparing a catalyst for producing carbon nanotubes, wherein the catalyst supporting solution includes a precursor of a cocatalyst metal selected from the group consisting of Mo and V.

(5) In any one of (1) to (4) above of the present invention, there is provided the method for preparing a catalyst for producing carbon nanotubes, wherein a molar ratio between the precursor of the main catalyst metal and the precursor of the cocatalyst metal in the catalyst supporting solution is 5:1 to 20:1.

(6) In any one of (1) to (5) above of the present invention, there is provided the method for preparing a catalyst for producing carbon nanotubes, wherein the support includes an oxide or hydroxide of at least one metal selected from the group consisting of aluminum, magnesium, calcium, and silicon.

(7) In any one of (1) to (6) above of the present invention, there is provided the method for preparing a catalyst for producing carbon nanotubes, wherein the support has a specific surface area of $100 \ m^2/g$ to $1{,}000 \ m^2/g$.

(8) In any one of (1) to (7) above of the present invention, there is provided the method for preparing a catalyst for producing carbon nanotubes, wherein step S2 above is performed under normal or reduced pressure conditions.

(9) In any one of (1) to (8) above of the present invention, there is provided the method for preparing a catalyst for producing carbon nanotubes, wherein step S2 above is performed under 10 mbar to 100 mbar.

(10) In any one of (1) to (9) above of the present invention, there is provided the method for preparing a catalyst for producing carbon nanotubes, wherein step S2 above is performed at 50 °C to 200 °C.

(11) In any one of (1) to (10) above of the present invention, there is provided the method for preparing a catalyst for producing carbon nanotubes, wherein step S3 above is performed at 600 °C to 800 °C for 0.5-3 hours.

(12) According to another aspect of the present invention, there is provided a method for producing carbon nanotubes, the method including: a step for mixing a catalyst supporting solution and a support to obtain a mixture (S1); a step for drying the mixture (S2); a step for sintering the dried mixture to obtain a supported catalyst (S3); a step for introducing the obtained catalyst into a chemical vapor deposition reactor (S4); and a step for injecting a carbon source gas into the reactor and heating the reactor to synthesize carbon nanotubes (S5), wherein step S1 above is performed under 1.5 bar to 4.5 bar.

**ADVANTAGEOUS EFFECTS**

When carbon nanotubes are produced using the catalyst prepared by the preparation method of the present invention, the bulk density of the finally produced carbon nanotubes is high, and thus more carbon nanotubes can be produced based on the same reaction volume.

**MODE FOR CARRYING OUT THE INVENTION**

Hereinafter, the present invention will be described in more detail.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The term "carbon nanotubes" as used herein refers to a secondary structure in which unit cells of a carbon nanotube are aggregated in a bundle type in whole or in part. The unit cell of carbon nanotubes is configured such that a graphite sheet has a cylindrical shape having a nano-sized diameter, and has an sp2 bond structure. In this case, the carbon nanotube may exhibit characteristics of a conductor or semiconductor depending on a structure and an angle at which the graphite sheet is rolled. The unit cells of carbon nanotubes can be divided into single-walled carbon nanotubes (SWCNTs), double-walled carbon nanotubes (DWCNTs) and multi-walled carbon nanotubes (MWCNTs), depending on the number of bonds that form the walls. The thinner the wall, the lower the resistance.

The carbon nanotubes of the present invention may include any one or two or more of single-walled, double-walled, and multi-walled carbon nanotube unit cells.

**Method for Preparing Catalyst for Producing Carbon Nanotubes**

The catalyst used for the synthesis of carbon nanotubes using chemical vapor deposition may be prepared in the form of solid particles using various methods, but is generally prepared using a supporting method in which a metal component is supported on a support. Particularly, the method for preparing a catalyst using the supporting method enables a large amount of catalyst to be prepared in a shorter time compared to a method for preparing a catalyst using physical or chemical deposition, and has been most widely used in the industrial field because the cost for preparing the catalyst is also low and the activity of the catalyst itself is also excellent. Furthermore, recently, while a catalyst is prepared by using the supporting method, a method for supporting a cocatalyst component for improving the activity of the catalyst component together with a main catalyst component is preferred.

However, in the case of the catalyst prepared by using the supporting method, since there is a limit of the amount of the catalyst that can be supported according to the physical properties of the support itself, it is not easy to increase the catalytic activity to at least a certain degree. In particular, because an excess of the cocatalyst supported deteriorates the activity of the main catalyst even when the cocatalyst and the main catalyst are supported together, the catalyst should be prepared within the content range of the main catalyst and the cocatalyst, which can make the highest catalytic activity while maintaining an appropriate ratio between the main catalyst and the cocatalyst. In this respect, studies on structural characteristics of the support capable of further increasing the amount of the main catalyst and the cocatalyst in the optimum range or the supporting amount are also actively conducted.

Meanwhile, as a result of research which has been started from these limitations, the inventors of the present invention have found that when pressurized in the supporting process, the catalyst component moves more to the inner region of the support, thereby improving the activity of the finally prepared catalyst and increasing the bulk density of the carbon nanotubes produced from the catalyst, and thus have completed the present invention.

Accordingly, the present invention provides a method for preparing a catalyst for producing carbon nanotubes, the method including a step for mixing a catalyst supporting solution and a support to obtain a mixture (S1), a step for drying the mixture (S2), and a step for sintering the dried mixture to obtain a supported catalyst (S3), wherein step S1 above is performed under 1.5 bar to 4.5 bar.

Hereinafter, the support, the catalyst supporting solution, which are used for the method for preparing a catalyst for producing carbon nanotubes of the present invention, and each step of the preparation method will be described in detail separately.

## Support

The support used in the catalyst preparation method according to the present invention may be an oxide or hydroxide of at least one metal selected from the group consisting of aluminum, magnesium, calcium, and silicon, and particularly, may be an aluminum oxide or an aluminum hydroxide. Since the metal oxides have porosity and a large specific surface area, the metal oxides may exhibit high catalytic activity when a catalyst component is supported, and also have excellent mechanical strength, and thus it is possible to suppress a phenomenon such as the collapse of particles of the catalyst during the production process of carbon nanotubes. In particular, the aluminum oxide is preferred in that the catalyst component is easily supported and has excellent durability.

The support may have a specific surface area of 100 m$^2$/g to 1,000 m$^2$/g, preferably 150 m$^2$/g to 600 m$^2$/g. When the specific surface area of the support is within the above-described range, there is an advantage that the activity of the catalyst may be increased and the durability may also be maintained at an excellent level. Meanwhile, the specific surface area may be measured by a BET method, and more specifically, may be calculated from the nitrogen gas adsorption amount under the liquid nitrogen temperature (77K) by using the BELSORP-mini II from BEL Japan, Inc.

The support may have a D50 of 10 μm to 70 pm, a D90 of 20 μm to 90 pm, preferably, a D50 of 20 μm to 60 μm, and a D90 of 30 μm to 80 μm. In addition, the support may have a bulk density of 300 kg/m$^3$ to 1,200 kg/m$^3$, and preferably a bulk density of 500 kg/m$^3$ to 1,000 kg/m$^3$. When the physical properties of the support satisfy the above-described range, the durability of the catalyst including the support may not only be excellent, but the size and physical properties of the carbon nanotubes produced from the catalyst may also be excellent. Meanwhile, the D50 and D90 may be measured using a laser diffraction type particle size analyzer (S3500, Microtrac, Inc.), and the bulk density may be calculated by filling a support to be measured in a 5-mL cylinder, measuring a volume by reading the graduations, and then dividing the weight confirmed on the scale by the previously measured volume.

The shape of the support is not particularly limited, but may be spherical or in the form of potato. In addition, the support may have a porous structure, a molecular sieve structure, a honeycomb structure, or the like so as to have a relatively high surface area per unit mass or unit volume.

## Catalyst Supporting Solution

In the catalyst preparation method of the present invention, a catalyst supporting solution is used to support an active ingredient, which serves as a substantial catalyst, on the support. The catalyst supporting solution may include a main catalyst component capable of exhibiting the catalytic activity and a cocatalyst component capable of increasing the catalytic activity of the main catalyst component.

The main catalyst component may be at least one selected from the group consisting of Co, Ni, and Fe, and preferably Co. The main catalyst component serves to lower the activation energy of the reaction of forming carbon nanotubes by decomposing the carbon source gas so that the reaction proceeds smoothly, and the main catalyst components listed above have the advantage of having high catalytic activity and excellent durability.

The main catalyst component may be included in the form of a precursor in the catalyst supporting solution. Specifically, the main catalyst precursor may include a halide, a nitride, an oxide, a nitric oxide, a sulfur oxide, a sulfide, a hydroxide, a metal salt, or the like of the main catalyst component, and more specifically, in the case of Co, $Co(NO_3)_2 \cdot 6H_2O$, $Co_2(CO)_8$, $[Co_2(CO)_6(t\text{-BuC=CH})]$, $Co(OAc)_2$ or $CoCl_2 \cdot 6H_2O$ may be used, in the case of Fe, $Fe(NO_3)_2 \cdot 6H_2O$, $Fe(NO_3)_2 \cdot 9H_2O$, $Fe(NO_3)_3$, $Fe(OAc)_2$, $FeSO_4 \cdot 7H_2O$ or $FeCl_2 \cdot 4H_2O$ may be used, in the case of Ni, $Ni(NO_3)_2 \cdot 6H_2O$, $NiCl_2 \cdot 2H_2O$, $Ni(CO)_4$ or $Ni(OAc)_2 \cdot 4H_2O$ may be used. If the main catalyst precursor listed above is used, there is an advantage that it is possible to prepare a catalyst having a high activity while minimizing the loss of the main catalyst component during the subsequent drying and sintering processes.

The cocatalyst component may be at least one selected from the group consisting of Mo and V, and preferably V. The cocatalyst component serves to further increase the activity of the catalyst by increasing the dispersibility of the main catalyst component, and there are advantages that the cocatalyst components listed above have a high synergistic effect with the cocatalyst components as described above and are easily supported on the support.

The cocatalyst component may also be included in the catalyst supporting solution in the form of a precursor. Specifically, the cocatalyst precursor may include a halide, a nitride, an oxide, a nitric oxide, a sulfur oxide, a sulfide, a hydroxide, a metal salt, or the like of a cocatalyst component, more specifically, in the case of Mo, $(NH_4)_6Mo_7O_{24} \cdot 4H_2O$, $Mo(CO)_6$, $(NH_4)MoS_4$ or $MoO_3$ may be used, and in the case of V, $NH_4VO_3$, $NaVO_3$, $V(CO)_6$, $V_2SO_4 \cdot 7H_2O$, $V_2O_3$, or $V_2O_5$ may be used. The precursors listed above have the advantage of being relatively easy to obtain and being easily converted to an oxide form.

The solvent of the catalyst supporting solution may be any solvent as long as it can dissolve the main catalyst precursor and the cocatalyst precursor as described above and be easily removed in a subsequent drying process, and for example, water, an alcohol solvent such as ethanol, methanol, or butanol, an aromatic hydrocarbon solvent such as toluene or xylene, or the like may be used, but is not limited thereto.

The molar ratio between the main catalyst component and the cocatalyst component in the catalyst supporting solution may be 10:0.1 to 10:10, preferably 10:0.5 to 10:5. If the molar ratio between the main catalyst component and the cocatalyst component satisfies the above-described conditions, the synergistic effect between the two components may be maximized, and specifically, the activity of the catalyst may be maximized while minimizing the aggregation of active components in the support.

The concentration of the main catalyst component in the catalyst supporting solution may be 2 wt% to 15 wt%, preferably 3 wt% to 10 wt%, and the concentration of the cocatalyst component may be 0.1 wt% to 1.5 wt%, preferably 0.3 wt% to 1.0 wt%. If the concentration of each component in the catalyst supporting solution is within the above-described range, the main catalyst and cocatalyst components may be more easily supported.

In the catalyst supporting solution, an organic acid may be further included in addition to the main catalyst precursor and the cocatalyst precursor. The organic acid used in the present invention may be, for example, a multicarboxylic acid, which is a compound containing at least one carboxyl group, and has high solubility as a complexing agent, inhibits precipitation, facilitates synthesis of catalyst, and increases synthesis of carbon nanotubes as an activator. The multicarboxylic acid may be at least one selected from among dicarboxylic acid, tricarboxylic acid, and tetracarboxylic acid, and for example, citric acid, oxalic acid, malonic acid, succinic acid, tartaric acid, or the like may be used.

The organic acid may be included in an amount of 0.1 wt% to 1.5 wt% based on the total weight of the catalyst supporting solution. Within this range, the metal components of the main catalyst and the cocatalyst are not precipitated in the catalyst solution, and the occurrence of cracks in the subsequent sintering process may also be suppressed.

In addition, the sum of the main catalyst precursor and the cocatalyst precursor and the organic acid may be appropriately mixed in a molar ratio range of about 5:1 to 30:1, and if the molar ratio is satisfied, the bulk density of the carbon nanotubes synthesized from the prepared supported catalyst may be further increased.

**Mixing Step (S1)**

In order to support the main catalyst and the cocatalyst components in the catalyst supporting solution on the support, a step of mixing the catalyst supporting solution and the support is preceded. The mixing process is generally applied to the catalyst preparation method using the supporting method, but in the present invention, unlike the conventional method, the pressure is applied during the mixing process so that the amount of catalyst components introduced into the support may be increased.

Specifically, in the catalyst preparation method of the present invention, the mixing step is performed under a pressure of 1.5 bar to 4.5 bar, preferably 2 bar to 4 bar. If the mixing is performed under the above-described pressure conditions, the catalyst component introduced into the support may be maximized, and if the pressure is lower than the above-described range, the effect of the pressurization is insignificant, and if the pressure is higher than the above-described range, the energy required for the pressurization increases, thereby reducing economics, and the mixing equipment may not be able to sufficiently withstand the pressurization.

As conditions other than the above-described pressure conditions, matters applicable to the mixing process may be applied without particular limitation.

Meanwhile, in this step, the support and the catalyst supporting solution may be mixed so that the main catalyst component content is 1 wt% to 30 wt%, preferably 3 wt% to 20 wt%, and more preferably 5 wt% to 15 wt%, based on the total weight of the catalyst. If the main catalyst component content is within the above-described range, the catalytic activity may be maximized.

**Drying Step (S2)**

In order to efficiently convert the main catalyst and the cocatalyst precursors of the mixed catalyst supporting solution into an oxide form, a drying step of preferentially removing the solvent from the mixture before the sintering step is required.

The drying in this step may be performed through a facility commonly used for drying, and may be performed under normal or reduced pressure conditions. When the drying is performed under normal pressure, the drying may be performed through equipment such as an oven, and when the drying is performed under reduced pressure, the drying may be performed through equipment such as a dryer equipped with reduced pressure equipment. When the drying is performed under reduced pressure, the pressure may be 10 mbar to 100 mbar, preferably 50 mbar to 100 mbar. If the drying is performed under reduced pressure within the above-described pressure range, there is an advantage that more solvents may be removed.

The temperature at which the drying is performed may be 50 °C to 200 °C, particularly 100 °C to 150 °C in the case of normal pressure drying, and 50 °C to 100 °C in the case of reduced pressure drying. Since the drying under reduced pressure is easier, the temperature in reduced pressure drying may be lower than that of normal pressure drying. The solvent of the catalyst supporting solution may be more smoothly removed under the above-described temperature conditions, the solvent may not be sufficiently removed when the temperature is too low, and when the temperature is too high, the solvent may be sufficiently removed, but there may occur a limitation in that the catalyst component or the support is lost.

**Sintering Step (S3)**

The solvent through the previous drying step is removed sufficiently, and then the dried mixture is sintered to obtain a final catalyst. During the sintering process, the main catalyst and the cocatalyst precursor components on the surface and inside of the support may be converted into oxides, thereby having the catalytic activity.

The sintering may be performed at 600 °C to 800 °C, preferably, 650 °C to 750 °C. In addition, the sintering may be performed for 0.5-3 hours, preferably 1-2 hours. When the sintering temperature in this step is too low or the sintering time is too short, the catalyst precursor may not be sufficiently converted into an oxide form, and when the sintering temperature is too high or the sintering time is too long, the structural collapse of the support or the elimination of the supported cocatalyst and main catalyst components may occur.

The main catalyst component content of the catalyst for producing carbon nanotubes prepared through up to this step may be 5 wt% to 20 wt%, preferably 10 wt% to 15 wt%. The main catalyst component content may be calculated by dividing the mass of the main catalyst component in the main catalyst precursor introduced during the preparation process by the mass of the finally obtained catalyst, and separately, may also be calculated by measuring the main catalyst component content in the catalyst particles through ICP-OES analysis.

**Method for Producing Carbon Nanotubes**

The present invention provides a method for producing carbon nanotubes using the catalyst prepared through the above-described catalyst preparation method. Specifically, the present invention provides a method for producing carbon nanotubes, the method including a step for mixing a catalyst supporting solution and a support to obtain a mixture (S1), a step for drying the mixture (S2), a step for sintering the dried mixture to obtain a supported catalyst (S3), a step for introducing the obtained catalyst into a chemical vapor deposition reactor (S4), and a step for injecting a carbon source gas into the reactor and heating the reactor to synthesize carbon nanotubes (S5), wherein step S1 above is performed under 1.5 bar to 4.5 bar.

In the method for producing carbon nanotubes, steps S1 to S3 above are the same as those described in the catalyst preparation method.

Step S4 above is a step for introducing the catalyst obtained through the previous steps into the chemical vapor deposition reactor, and the introduced catalyst is then flowed to synthesize carbon nanotubes on the surface. The reactor used in the present method is the chemical vapor deposition reactor, and may be applied without particular design limitations as long as it is generally used for the synthesis of carbon nanotubes. Meanwhile, in this step, some of the pre-synthesized carbon nanotube particles may be introduced together with the catalyst to secure the internal temperature of the reactor. When the carbon nanotube particles are introduced together with the catalyst, a sufficient internal temperature of the reactor can be secured with only a small amount of catalyst, and thus there is an advantage that a uniform reaction is possible.

Meanwhile, according to the production method of the present invention, the carbon source gas is a carbon-containing gas which is capable of forming carbon nanotubes through decomposition at a high-temperature state, and particularly, various carbon-containing compounds including aliphatic alkane, aliphatic alkene, aliphatic alkyne, aromatic compounds, etc. may be used. More particularly, compounds including methane, ethane, ethylene, acetylene, ethanol, methanol, acetone, carbon monoxide, propane, butane, benzene, cyclohexane, propylene, butene, isobutene, toluene, xylene, cumene, ethylbenzene, naphthalene, phenanthrene, anthracene, acetylene, formaldehyde, acetaldehyde, etc. may be used.

In the production method of the present invention, a flowing gas may be injected into the chemical vapor deposition reactor together with the carbon source gas. The flowing gas is for imparting fluidity of the carbon nanotubes, which are synthesized in the fluidized bed reactor, and catalyst particles, and a gas having high thermal stability without reacting with a carbon source gas or the carbon nanotubes may be used. For example, a nitrogen gas or an inert gas may be used as the flowing gas.

In addition, in the production method of the present invention, a reducing gas may be injected together with the carbon source gas and flowing gas. The reducing gas may further promote the decomposition of the carbon source gas, and for example, a hydrogen gas may be used as the reducing gas.

In the production method of the present invention, the heating in the synthesizing step may be to bring the temperature inside the reactor to 600 °C to 800 °C. If the temperature in the reactor is within the above-described range, the carbon source gas may be easily decomposed to easily synthesize carbon nanotubes. When the temperature is less than the above-described range, there may be a limitation in that the carbon nanotubes are not well produced, and when the temperature exceeds the above-described range, there may occur limitations in that a large amount of cost is not only consumed for heating, but the catalyst particles themselves may be also decomposed.

The carbon nanotubes produced by the method for producing carbon nanotubes provided by the present invention may have a bulk density of 20 $kg/m^3$ or more, preferably 23 $kg/m^3$ or more, and more preferably, 24 $kg/m^3$ or more, and may have a bulk density of 50 $kg/m^3$ or less, preferably 40 $kg/m^3$ or less. The carbon nanotubes having the bulk density within the above-described range may have particularly excellent dispersibility and conductivity.

Hereinafter, the present invention will be described in more detail with reference to examples and experimental examples in order to specifically describe the present invention, but is not limited to the examples and experimental examples. The examples according to the present invention may be modified in various different forms, and the scope of the present invention should not be interpreted to be limited to the examples described below. Rather, the examples of the present invention are provided so that this description will be thorough and complete, and will fully convey the scope of the present invention to those skilled in the art.

**Example 1**

An alumina support having a specific surface area of 190 $m^2/g$ and a D50 of 50 $\mu$m was prepared. In addition, a cobalt precursor, $Co(NO_3)_2 \cdot 6H_2O$ and a vanadium precursor, $NH_4VO_3$ were mixed and dissolved in water at a molar ratio of 10:1 to prepare a catalyst supporting solution. The cobalt concentration in the catalyst supporting solution was 8.4 wt%, and the vanadium concentration was 0.7 wt%. The prepared alumina support was introduced to the prepared catalyst supporting solution and mixed so that the cobalt content in the catalyst was 13 wt%, and the pressure at this time was maintained at 2 bar. After the mixing was completed, the mixture was dried under normal pressure and at 120 °C, and then sintered at 720 °C in air for 1 hour and 30 minutes to obtain a catalyst. The drying under normal pressure in Table 1 below means that drying is performed under the same conditions as in Example 1.

**Examples 2 to 7**

Catalysts were obtained in the same manner as in Example 1, except that the pressure during the mixing process, drying conditions, and cobalt content were varied as shown in Table 1 below. Meanwhile, the drying under reduced pressure means that drying is performed under the conditions of 80 mbar and 80 °C.

**Comparative Examples 1 to 4**

Catalysts were obtained in the same manner as in Example 1, except that no pressurization was performed during the mixing, and drying conditions and cobalt content were varied. The preparation conditions of each of Comparative Examples are summarized in Table 1 below.

[Table 1]

|  | Cobalt content (wt%) | Pressure during mixing (bar) | Drying conditions |
|---|---|---|---|
| Example 1 | 13 | 2 | Normal pressure |
| Example 2 | 13 | 2 | Reduced pressure |
| Example 3 | 13 | 3.5 | Normal pressure |
| Example 4 | 13 | 3.0 | Normal pressure |
| Example 5 | 13 | 3.5 | Reduced pressure |
| Example 6 | 13 | 4.0 | Normal pressure |
| Example 7 | 8 | 3.5 | Normal pressure |
| Comparative Example 1 | 13 | 1 (no pressurization) | Normal pressure |
| Comparative Example 2 | 13 | 1 (no pressurization) | Reduced pressure |
| Comparative Example 3 | 8 | 1 (no pressurization) | Normal pressure |
| Comparative Example 4 | 13 | 5.0 | Normal pressure |

**Experimental Example 1. Confirmation of Physical Properties of Carbon Nanotubes Produced from Catalyst**

The catalysts prepared in Examples and Comparative Examples were introduced into a chemical vapor deposition reactor, and nitrogen, hydrogen, and ethylene gases were introduced into the reactor at a volume ratio of 1:1:1. Then, carbon nanotubes were synthesized by setting the temperature inside the reactor to 680 °C. The bulk density and yield of the obtained carbon nanotubes were measured and summarized in Table 2 below, and the bulk density and yield were measured by the following method.

1) Bulk density: the produced carbon nanotube powder was filled in a 5-mL cylinder, the volume was measured by reading the graduations, and then the weight of the carbon nanotubes confirmed on the scale was divided by the previously measured volume to calculate the bulk density.
2) Yield: the yield was calculated according to the following equation.

$$\text{Yield} = (\text{total weight of produced carbon nanotubes} - \text{weight of used catalyst during production}) / \text{weight of used catalyst during production}$$

[Table 2]

|  | Bulk density (kg/m$^3$) | Yield (times) |
|---|---|---|
| Example 1 | 24.1 | 13.6 |
| Example 2 | 24.1 | 12.8 |
| Example 3 | 32.8 | 11.6 |
| Example 4 | 28.5 | 12.9 |
| Example 5 | 29.8 | 13.5 |
| Example 6 | 33.0 | 12.5 |

(continued)

|  | Bulk density (kg/m$^3$) | Yield (times) |
|---|---|---|
| Example 7 | 24.0 | 6.0 |
| Comparative Example 1 | 22.6 | 11.2 |
| Comparative Example 2 | 22.4 | 11.3 |
| Comparative Example 3 | 17.6 | 6.4 |
| Comparative Example 4 | 33.5 | 9.8 |

As can be seen in Table 2 above, it was confirmed that when the catalysts of Example were used, carbon nanotubes have a higher bulk density than when the catalysts of Comparative Examples were used. The high bulk density of the produced carbon nanotubes means that a larger amount of the carbon nanotubes are synthesized within the same reactor volume, and the carbon nanotube synthesis ability of the catalyst prepared by using the catalyst preparation method of the present invention is excellent. In addition, in terms of the yield through which how much carbon nanotubes were synthesized compared to the amount of catalyst used can be compared, a higher yield was generally found in the catalysts according to Examples on the basis of the same cobalt content. Meanwhile, Comparative Example 4 in which the mixing was performed under a pressure condition higher than Examples of the present invention had the bulk density of the produced carbon nanotubes higher than Examples, but the yield itself of Comparative Example 4 was inferior to those of Examples. Accordingly, it was confirmed that a large amount of carbon nanotubes can be economically produced when the method for preparing a catalyst of the present invention is used to prepare the catalyst and carbon nanotubes are synthesized using the catalyst.

**Claims**

1. A method for preparing a catalyst for producing carbon nanotubes, the method comprising:

   a step for mixing a catalyst supporting solution and a support to obtain a mixture (S1);
   a step for drying the mixture (S2); and
   a step for sintering the dried mixture to obtain a supported catalyst (S3),
   wherein step S1 above is performed under 1.5 bar to 4.5 bar.

2. The method of claim 1, wherein step S1 above is performed under 2 bar to 4 bar.

3. The method of claim 1, wherein the catalyst supporting solution comprises a precursor of a main catalyst metal selected from the group consisting of Co, Ni, and Fe.

4. The method of claim 3, wherein the catalyst supporting solution comprises a precursor of a cocatalyst metal selected from the group consisting of Mo and V.

5. The method of claim 4, wherein a molar ratio between the precursor of the main catalyst metal and the precursor of the cocatalyst metal in the catalyst supporting solution is 5:1 to 20:1.

6. The method of claim 1, wherein the support comprises an oxide or hydroxide of at least one metal selected from the group consisting of aluminum, magnesium, calcium, and silicon.

7. The method of claim 1, wherein the support has a specific surface area of 100 m$^2$/g to 1,000 m$^2$/g.

8. The method of claim 1, wherein step S2 above is performed under normal or reduced pressure conditions.

9. The method of claim 1, wherein step S2 above is performed under 10 mbar to 100 mbar.

10. The method of claim 1, wherein step S2 above is performed at 50 °C to 200 °C.

11. The method of claim 1, wherein step S3 above is performed at 600 °C to 800 °C for 0.5-3 hours.

12. A method for producing carbon nanotubes, the method comprising:

a step for mixing a catalyst supporting solution and a support to obtain a mixture (S1);
a step for drying the mixture (S2);
a step for sintering the dried mixture to obtain a supported catalyst (S3);
a step for introducing the obtained catalyst into a chemical vapor deposition reactor (S4); and
a step for injecting a carbon source gas into the reactor and heating the reactor to synthesize carbon nanotubes (S5),
wherein step S1 above is performed under 1.5 bar to 4.5 bar.

# EP 4 289 505 A1

<table>
<tr><td colspan="2"><strong>INTERNATIONAL SEARCH REPORT</strong></td><td>International application No.<br><strong>PCT/KR2022/015961</strong></td></tr>
</table>

**A. CLASSIFICATION OF SUBJECT MATTER**

**B01J 37/02**(2006.01)i; **B01J 21/02**(2006.01)i; **B01J 21/10**(2006.01)i; **B01J 21/06**(2006.01)i; **B01J 23/745**(2006.01)i; **B01J 23/75**(2006.01)i; **B01J 23/755**(2006.01)i; **B01J 23/22**(2006.01)i; **B01J 23/28**(2006.01)i; **B01J 37/04**(2006.01)i

According to International Patent Classification (IPC) or to both national classification and IPC

**B. FIELDS SEARCHED**

Minimum documentation searched (classification system followed by classification symbols)

B01J 37/02(2006.01); B01J 23/652(2006.01); B01J 23/78(2006.01); B01J 37/08(2006.01); C01B 32/162(2017.01); H01M 4/86(2006.01); H01M 4/88(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 탄소나노튜브(carbon nanotube), 촉매(catalyst), 압력(pressure)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2020-0012563 A (LG CHEM, LTD.) 05 February 2020 (2020-02-05)<br>See claims 1, 12 and 13; and paragraphs [0040], [0051], [0084], [0087], [0107], [0110], [0115], [0117] and [0155]. | 1-12 |
| Y | KR 10-2021-0072986 A (HYUNDAI MOTOR COMPANY et al.) 18 June 2021 (2021-06-18)<br>See claims 1, 9, 11, 12 and 14. | 1-12 |
| A | KR 10-2012-0092204 A (KOREA KUMHO PETROCHEMICAL CO., LTD.) 21 August 2012 (2012-08-21)<br>See entire document. | 1-12 |
| A | KR 10-2009-0027049 A (KOREA INSTITUTE OF ENERGY RESEARCH) 16 March 2009 (2009-03-16)<br>See entire document. | 1-12 |
| A | JP 11-276895 A (PETROLEUM ENERGY CENTER FOUND et al.) 12 October 1999 (1999-10-12)<br>See entire document. | 1-12 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **30 January 2023** | **30 January 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/015961**

| Patent document cited in search report | | | Publication date (day/month/year) | Patent family member(s) | | | Publication date (day/month/year) |
|---|---|---|---|---|---|---|---|
| KR | 10-2020-0012563 | A | 05 February 2020 | KR | 10-2473017 | B1 | 02 December 2022 |
| KR | 10-2021-0072986 | A | 18 June 2021 | CN | 112952116 | A | 11 June 2021 |
| | | | | US | 2021-0175516 | A1 | 10 June 2021 |
| KR | 10-2012-0092204 | A | 21 August 2012 | KR | 10-1241035 | B1 | 11 March 2013 |
| KR | 10-2009-0027049 | A | 16 March 2009 | EP | 2037517 | A1 | 18 March 2009 |
| | | | | EP | 2037517 | B1 | 08 March 2017 |
| | | | | JP | 2009-067674 | A | 02 April 2009 |
| | | | | JP | 5107840 | B2 | 26 December 2012 |
| | | | | KR | 10-0901846 | B1 | 09 June 2009 |
| | | | | US | 2009-0068545 | A1 | 12 March 2009 |
| | | | | US | 8221830 | B2 | 17 July 2012 |
| JP | 11-276895 | A | 12 October 1999 | JP | 3034493 | B2 | 17 April 2000 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020150007266 A